# EUROPÄISCHE PATENTSCHRIFT

(11) **EP 0 970 834 B1**
(45) Veröffentlichungstag und Bekanntmachung des Hinweises auf die Patenterteilung: **27.10.2004**
(21) Anmeldenummer: 99110439.9
(22) Anmeldetag: 29.05.1999
(51) Int. Cl.: B60J 7/20

(54) **Cabriolet-Fahrzeug mit einem Verdeckkasten**
Convertible vehicle provided with a storage compartment
Véhicule convertible équipé d'un coffre de stockage

(30) Priorität: 08.07.1998 DE 29812164 U
(43) Veröffentlichungstag der Anmeldung: 12.01.2000
(73) Patentinhaber: Wilhelm Karmann GmbH, D-49084 Osnabrück (DE)
(72) Erfinder: Rothe, Karl, 49597 Rieste (DE); Lehnig, Frank, 49086 Osnabrück (DE)
(74) Vertreter: Busse & Busse Patentanwälte

(56) Entgegenhaltungen:
- DE-C- 581 486
- DE-C- 19 635 869

## Beschreibung

Die Erfindung bezieht sich auf ein Cabriolet-Fahrzeug mit einem in einem Verdeckkasten ablegbaren beweglichen Verdeck nach dem Oberbegriff des Anspruchs 1.

Üblicherweise ist bei derartigen Fahrzeugen der Verdeckkastendeckel an seinem heckseitigen Kantenbereich schwenkbar angelenkt, so daß er mit der Fahrtrichtung beim Öffnen einen spitzen Winkel bildet. Das Verdeck weist dann einen hinteren Spannbügel auf, der zum Öffnen oder Schließen des Verdecks angehoben werden muß, damit der in Schließstellung eine Auflagefläche für den hinteren Verdeckrand bildende Verdeckkastendeckel auf- oder zugeschwenkt werden kann.

Bei einer festen Anbindung des hinteren Verdeckendes an die Karosserie ist der Spannbügel entbehrlich; dadurch ergeben sich Gewichtsvorteile. Zudem kann die Öffnungskinematik des Verdecks derart gestaltet werden, daß für die Insassen, etwa auf einer Rückbank, eine größere Kopffreiheit verbleibt. Hierbei ist es aber nicht möglich, den Verdeckkastendeckel in seinem hinterem Bereich beweglich anzulenken.

Die DE 196 35 869 C1 zeigt eine Abdeckplatte 23 für ein Klappverdeck, wobei die Abdeckplatte in ihrem in Fahrtrichtung vorderen Bereich schwenkbar angelenkt ist, so daß diese beim Öffnen mit der Fahrtrichtung einen stumpfen Winkel einschließt. In geöffneter Stellung der Abdeckplatte, in der das Öffnen und Schließen des Verdecks ermöglicht wird, steht diese jedoch annähernd senkrecht oberhalb der Brüstungslinie, so daß die Sicht nach hinten versperrt ist. Diese Stellung ist daher nur eine Zwischenstellung während der Verdeckbewegung.

Der Erfindung liegt das Problem zugrunde, ein gattungsgemäßes Cabriolet-Fahrzeug zu schaffen, das bei fester Anbindung des hinteren Verdeckrandes an die Karosserie eine dauerhafte Lagerung des Verdeckkastendeckels in Öffnungsstellung ermöglicht.

Die Erfindung löst dieses Problem mit den Merkmalen des Anspruches 1. Hinsichtlich weiterer vorteilhafter Ausgestaltungen wird auf die Ansprüche 2 bis 7 verwiesen.

Durch die erfindungsgemäße Ausbildung eines Cabriolet-Fahrzeugs ist in Öffnungsstellung der Verdeckkastendeckel derart verlagert, daß eine Sichtbeeinträchtigung oder optische Beeinträchtigung des Fahrzeugs nicht gegeben ist. Auch bei geschlossenem Verdeck kann der Verdeckkastendeckel in der aufrechten Öffnungsstellung dauerhaft verbleiben.

Besonders vorteilhaft ist der Verdeckkastendeckel in Öffnungsstellung hinter den Lehnen einer Sitzreihe, etwa der vorderen bei einem zweisitzigen Fahrzeug bzw. ansonsten der hinteren, angeordnet, wodurch eine besonders raumsparende Lagerung möglich ist. Sofern der Verdeckkastendeckel seitliche, gegenüber einem mittleren Hauptteil abwinkelbare Seitenteile umfaßt, die in Schließstellung Bereiche des seitlichen Verdeckgestänges überdecken und insofern während des Absenkens die von ihnen beanspruchte Breite verringert werden muß, sind diese besonders vorteilhaft abwinkelbar gegenüber dem Hauptteil, etwa derart, daß in Öffnungsstellung des Verdeckkastendeckels die Seitenteile schräg gegenüber dem Hauptteil in Fahrtrichtung abgewinkelt sind, so daß sie die Lehnen der Sitzreihe seitlich einfassen. Auch eine Abwinklung um etwa 180° gegenüber dem Hauptteil ist möglich, wobei die Seitenteile und der Hauptteil dann parallel liegen würden. Hierdurch wäre allerdings die Tiefe des Verdeckkastendeckels in Öffnungsstellung vergrößert.

Bei Synchronisation der Aufschwenkbewegung des Verdeckkastendeckels und der Abwinklungsbewegung der Seitenteile läßt sich über ein einziges Steuerungselement, auch ggf. über eine manuelle Bedienung, der Übergang des Verdeckkastendeckels aus der Schließstellung in die Öffnungsstellung und umgekehrt bewirken.

Weitere Vorteile und Einzelheiten ergeben sich aus einem in der Zeichnung dargestellten Ausführungsbeispiel des Gegenstandes der Erfindung.

In der Zeichnung zeigt:
- Fig. 1: eine abgebrochene und teilweise aufgebrochene Draufsicht auf einen heckseitigen Teilbereich eines erfindungsgemäßen Cabriolet-Fahrzeugs in Schließstellung des Verdeckkastendeckels,
- Fig. 2: eine ähnliche Ansicht wie Fig. 1 bei Absenkung des Verdeckkastendeckels in Öffnungsstellung,
- Fig. 3: eine abgebrochene und teilweise aufgebrochene Seitenansicht eines erfindungsgemäßen Cabriolet-Fahrzeugs mit in Schließstellung befindlichem Verdeckkastendeckel,
- Fig. 4: eine ähnliche Ansicht wie Fig. 3 während des Öffnens des Verdeckkastendeckels,
- Fig. 5: eine ähnliche Ansicht wie Fig. 4 bei weiterem Fortschreiten der Öffnung des Verdeckkastendeckels,
- Fig. 6: eine ähnliche Ansicht wie Fig. 5 nach vollständigem Absenken des Verdeckkastendeckels in Öffnungsstellung,
- Fig. 7: eine Schnitt entlang der Linie VII-VII in Fig. 1 in Schließstellung sowie in abgewinkelter Stellung der Seitenteile gegenüber dem Hauptteil (strichpunktiert),

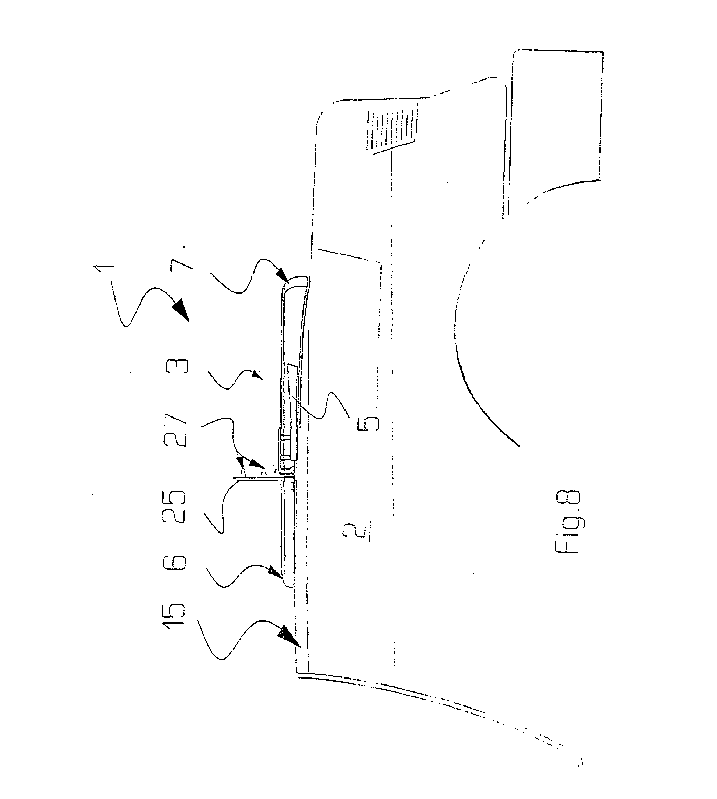

- Fig. 8: ein Sicherungselement zur Verriegelung und Halterung des Verdeckgestänges im abgelegten Zustand in einer Schnittansicht entlang der Linie VIII-VIII in Fig. 1,
- Fig. 9: eine Ansicht etwa entlang der Linie IX-IX in Fig. 3 des Antriebsmechanismus zur Anhebung bzw. Absenkung des aufrecht gestellten Verdeckkastendeckels.

Gemäß dem Ausführungsbeispiel umfaßt das Cabriolet-Fahrzeug 1 einen Verdeckkasten 2, der oberseitig von einem Verdeckkastendeckel 3 abdeckbar ist. Der Verdeckkasten 2 dient zur Aufnahme eines falt- oder klappbaren Verdecks 5 und befindet sich im rückwärtigen Teil des Cabriolet-Fahrzeugs 1 hinter einer den Innenraum begrenzenden Sitzreihe 4. Die Sitzreihe 4 kann je nach Fahrzeugart durch die vorderen Sitze oder bei mehr als zweisitzigen Fahrzeugen durch hintere Sitze gebildet sein. Der Verdeckkastendeckel 3 ist an seinem vorderen Kantenbereich 6 schwenkbar an der Fahrzeugkarosserie angelenkt, so daß er bei Öffnung mit der Fahrtrichtung F einen stumpfen Winkel einschließt. Dabei hebt sich der hintere Kantenbereich 7 des Verdeckkastendeckels von der Fahrzeugkarosserie ab. Dadurch ist es ermöglicht, daß das Verdeck 5 im Bereich der hinteren Kante 7 an der Fahrzeugkarosserie auch während des Öffnens des Verdeckkastendeckels 3 festgelegt verbleibt. Ein Spannbügel, der vor dem Öffnen des Verdeckkastendeckels 3 angehoben werden müßte und den hinteren Abschluß des Verdecks 5 von der Karosserie trennt, ist damit entbehrlich.

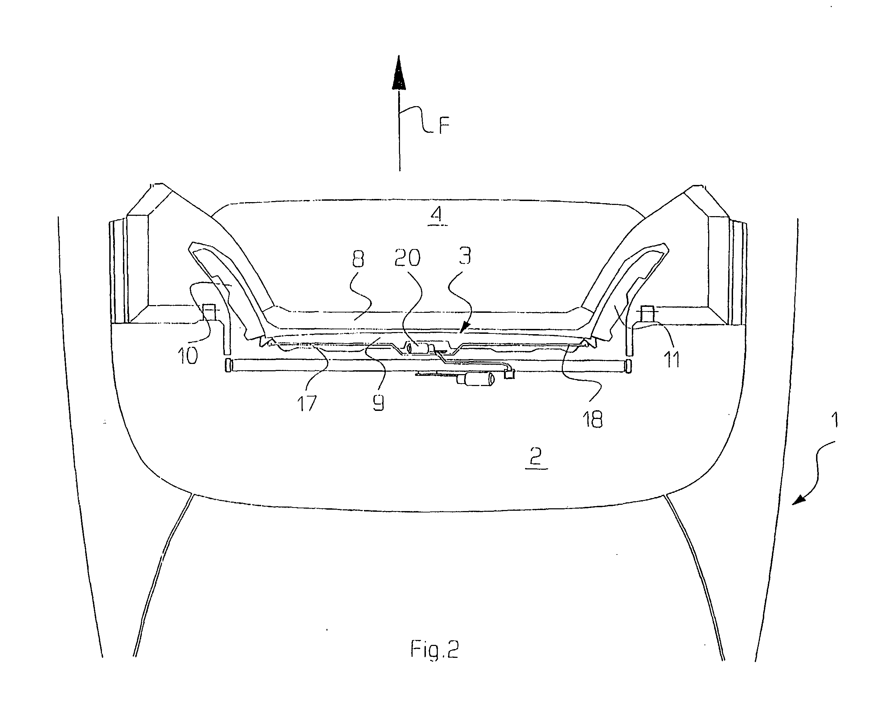

Bei Öffnung des Verdeckkastendeckels 3 wird dieser aus seiner im wesentlichen horizontalen, eine oberseitige Öffnung des Verdeckkastens 2 abdeckenden Schließstellung in eine Öffnungsstellung gemäß Fig. 2 verlagert, in der er in einer vertikalen, in das Cabriolet-Fahrzeug 1 abgesenkten Position unterhalb dessen Brüstungslinie 15 gehalten ist. Der Verdeckkastendeckel 3 steht dann hinter den Lehnen 8 der erwähnten Sitzreihe 4.

Der Verdeckkastendeckel 3 ist mehrteilig ausgebildet und umfaßt einen mittleren Hauptteil 9 sowie zwei seitliche, in Schließstellung die längs verlaufenden Gestängeteile des Verdecks überdeckenden Seitenteile 10,11, die gegenüber dem Hauptteil 9 im wesentlichen längs zum Fahrzeug 1 liegenden Achsen 12,13 verschwenkbar sind. Anstelle der hier aufgeführten Teilung in den Hauptteil 9 und die Seitenteile 10 und 11 ist auch eine andere Mehrteiligkeit des Verdeckkastendeckels 3 vorstellbar. In jedem Fall sind seitliche Teile, die in Schließstellung eine Abdeckung für die seitlichen Längsteile des Verdeckgestänges bilden, während des Verlagerns des Verdeckkastendeckels 3 in die aufrechte Position aus ihrer fluchtenden Lage zu einem mittleren Teil in eine die Breite des Verdeckkastendeckels 3 insgesamt verringernde Lage zu überführen. Die Seitenteile 10,11 können auch als separate Schwenkteile ohne Verbindung zu einem mittleren Hauptteil 9 ausgebildet sein.

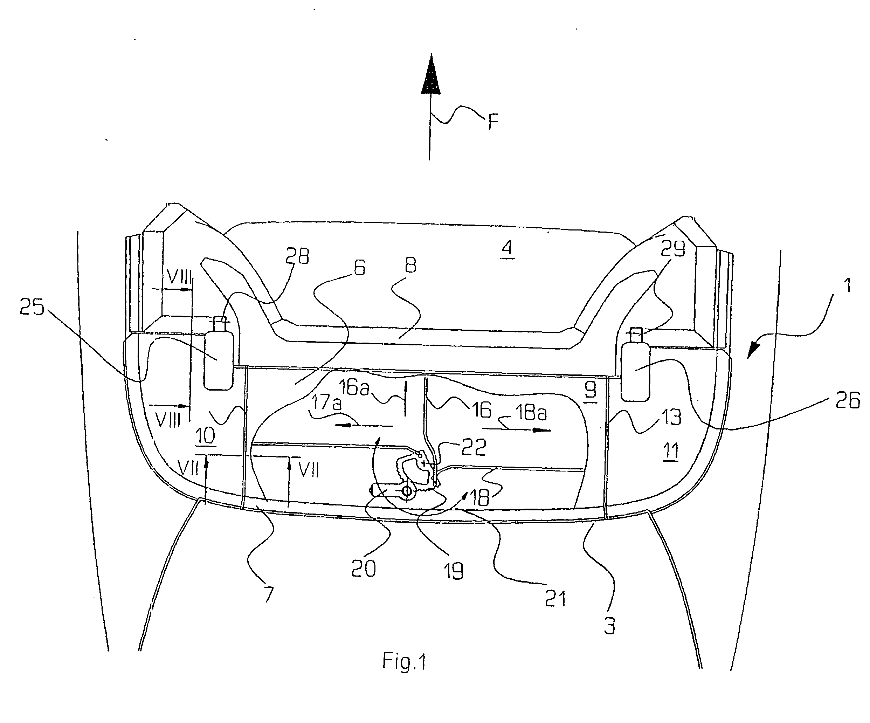

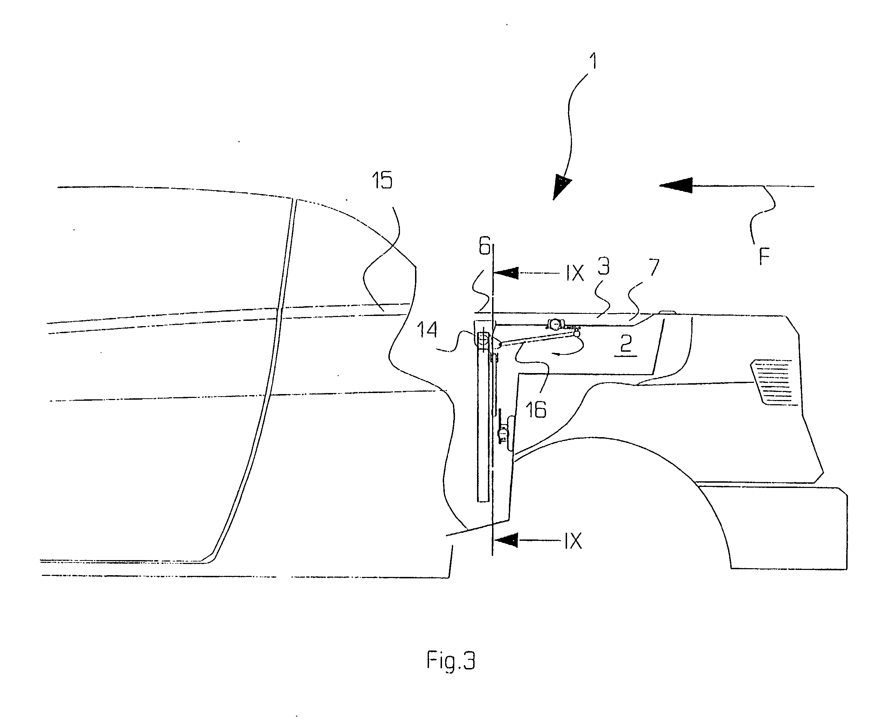

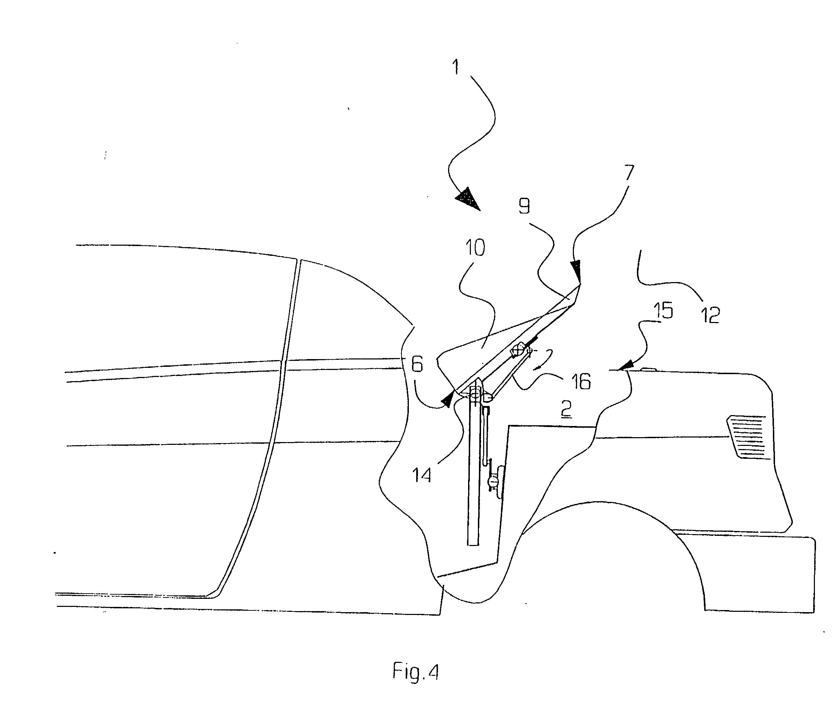

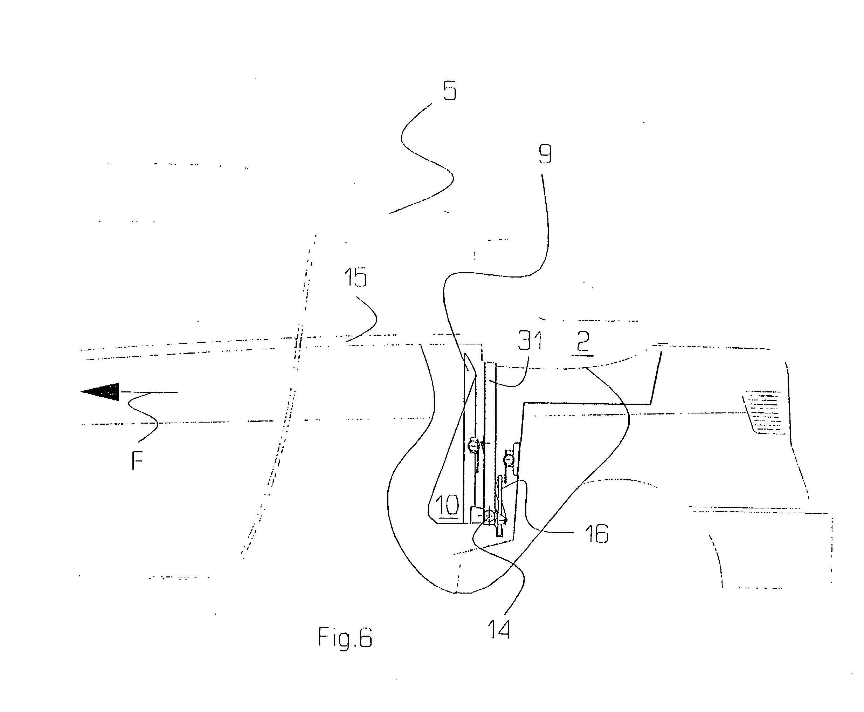

Während der Verlagerung des Verdeckkastendeckels 3 aus seiner den Verdeckkasten 2 abdeckenden Position gemäß Fig. 1 in eine den Verdeckkasten 2 freigebende Öffnungsstellung gemäß Fig. 2 wird zunächst der Verdeckkastendeckel 3 um eine seinem vorderen Kantenbereich 6 zugeordnete Schwenkachse 14, die sich quer zur Fahrtrichtung F erstreckt, mittels beispielsweise einer Gasdruckfeder oder eines ähnlichen Antriebselements, gegebenenfalls auch manuell, aufwärts verschwenkt (Fig. 3 bis Fig. 5), so daß eine aufrechte Position des Verdeckkastendeckels 3 oberhalb der Brüstungslinie 15 des Cabriolet-Fahrzeugs 1 eingestellt wird. Gleichzeitig werden die Seitenteile 10,11 um die Schwenkachsen 12,13 gegenüber dem Hauptteil 9 nach vorne abgewinkelt. Durch die anschließende Absenkung des Verdeckkastendeckels 3 gemäß Fig. 6 gelangen die Seitenteile 10 und 11 dann in eine neben der Lehne 8 der Sitzreihe 4 befindliche Stellung (Fig. 2). Anders als bei einer Abwinklung der Seitenteile 10,11 um etwa 180°, bei der diese dann parallel vor oder hinter dem Hauptteil 9 liegen würden, nimmt der hier gezeigte Verdeckkastendeckel 3 auch in Öffnungsstellung nur eine minimale Tiefe ein, so daß weder die Innenraumlänge noch die Kofferraumtiefe dadurch entscheidend eingeschränkt wird. Die Seitenteile 10,11 legen sich in die seitlichen Verkleidungen neben der Sitzreihe 4.

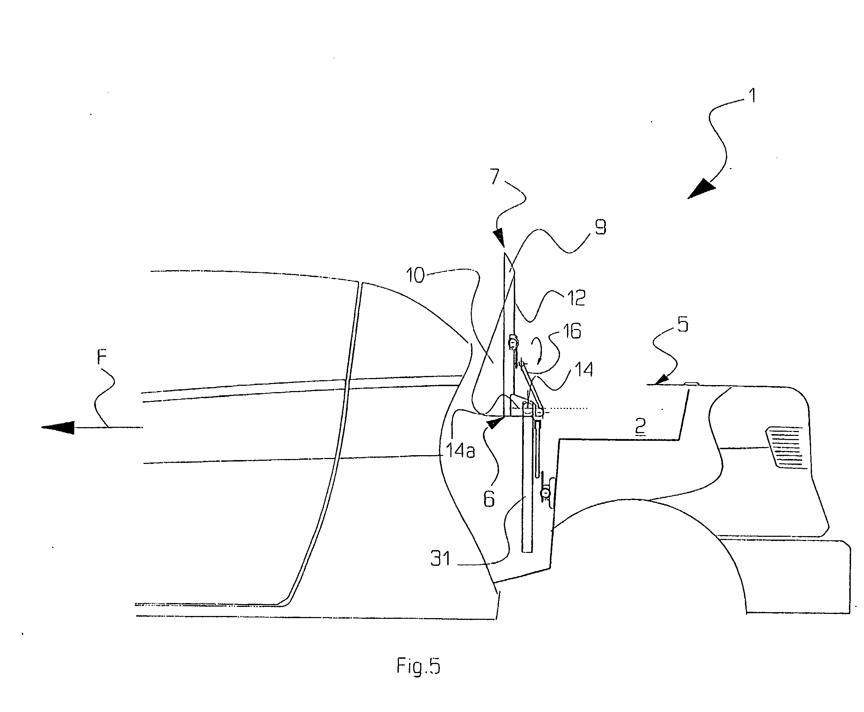

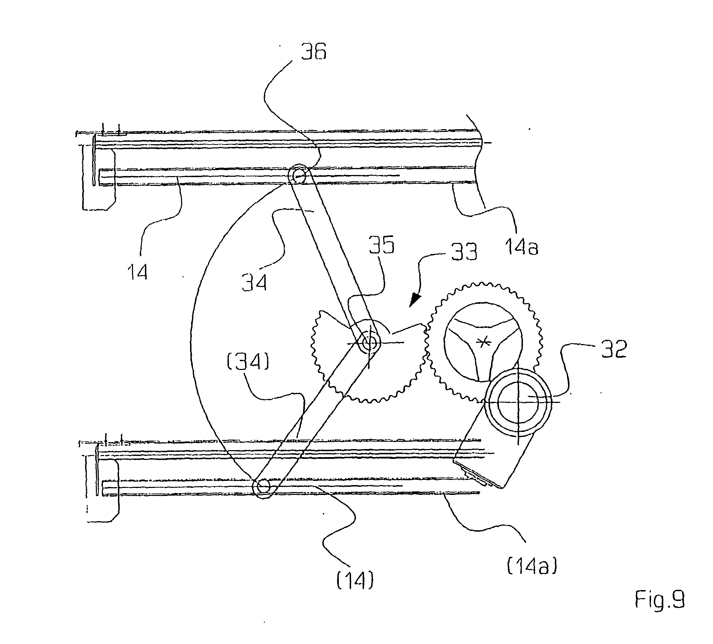

Zur Abwärtsbewegung des aufrecht gestellten Verdeckkastendeckels 3 aus der in Fig. 5 gezeigten Lage in die abgesenkte Stellung gemäß Fig. 6 ist eine im wesentlichen vertikale seitliche Hubkulisse 31 vorgesehen, in der die Schwenkachse 14 des Verdeckkastendeckels 3 auf und ab verfahren werden kann. Hierzu dient ein Antriebselement 32, das über ein Getriebe 33 einen mit der Schwenkachse 14 gelenkig verbundenen Bewegungsarm 34 verschwenkt und somit die Auf- oder Abwärtsbewegung der Schwenkachse 14 gemäß der Darstellung in Fig. 9 bewirkt. Der Bewegungsarm 34 ist um eine feste Achse 35, die in Fahrzeuglängsrichtung liegt, schwenkbar und mit seinem dieser Achse abgewandten Ende 36 mit der Schwenkachse 14 verbunden. Dabei ist das Ende 36 des Bewegungsarms 34 längs der Schwenkachse 14 verschieblich, so daß die Schwenkbewegung des Bewegungsarms 34 ohne eine seitliche Verschiebung des die Schwenkachse 14 ausbildenden Profils oder dergleichen Bauteils 14a durchgeführt werden kann. Das Bauteil 14a ist in der seitlichen Hubkulisse 31 zwangsgeführt und kann allein eine vertikale Hubbewegung ausführen.

Abweichend von der zeichnungsgemäßen Darstellung muß in Öffnungsstellung der Verdeckkastendeckel 3 nicht völlig vertikal liegen, sondern kann auch eine geneigte, an die Schrägstellung der Lehnen 8 angepaßte Position einnehmen.

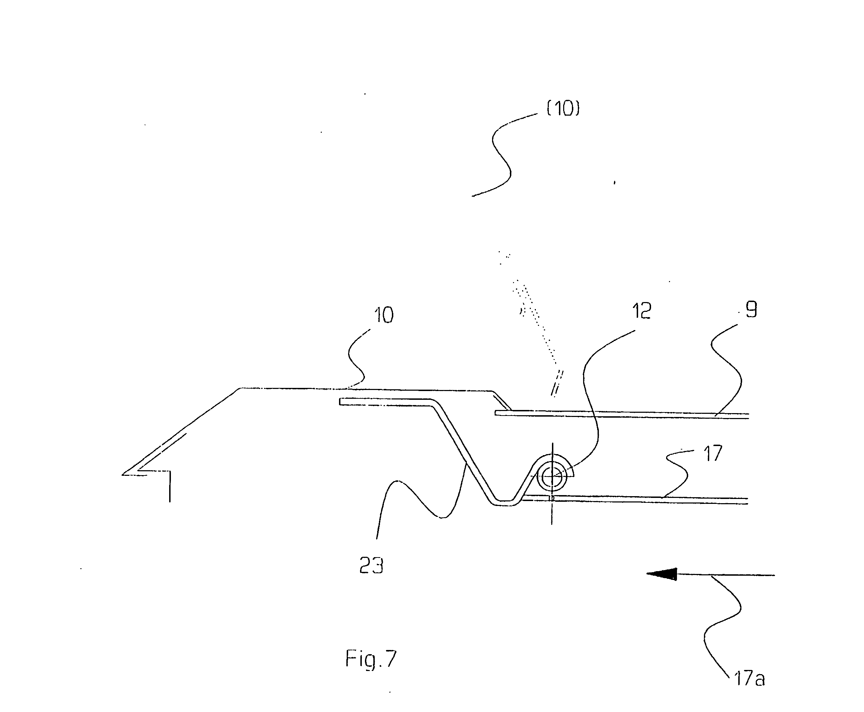

Zur Abwinklung der Seitenteile 10,11 gegenüber dem Hauptteil 9 sind weitere Antriebselemente 17,18 vorgesehen, die als Gestängeteile ausgebildet sind und über ein zentrales Umlenkgetriebe 19 mit dem Antriebselement 16, hier ebenfalls ein Gestängeteil, für das Aufschwenken des Verdeckkastendeckels 3 um seine vordere Kante 6 verbunden sind. Die Aufschwenkbewegung des Verdeckkastendeckels 3 um seine vordere Kante 6 und die Abwinklung der Seitenteile 10,11 gegenüber dem Hauptteil 9 um die Längsachsen 12,13 sind daher miteinander synchronisiert. So kann durch Bewegung eines Antriebsmotors 20 in Richtung des Pfeils 21 das Getriebe 19 um eine vertikale Schwenkachse 22 gedreht werden, wodurch die Gestängeteile 16,17 und 18 eine Kraft in Richtung der Pfeile 16a,17a und 18a erfahren. Durch die Kraft in Richtung des Pfeils 16a wird der Hauptteil 9 um die der vorderen Querkante 6 zugeordnete Schwenkachse 14 aufwärts verschwenkt, durch die Kräfte auf die Gestängeteile 17,18 in Richtung der Pfeile 17a,18a werden die Seitenteile 10,11 gegenüber dem Hauptteil 9 entsprechend der Darstellung in Fig. 7 abgewinkelt. Die Schwenkachsen 12,13 liegen unterhalb des Hauptteils 9, die Seitenteile 10,11 sind gegenüber diesen über Winkel 23 gehalten, so daß während des Abwinkelns die Seitenteile 10,11 eine besonders raumsparende und den Verdeckkastendeckel 3 insgesamt verschmälernde Lage gegenüber dem Hauptteil 9 einnehmen. Anstelle des die jeweiligen Verschwenkungen bewirkenden und insofern als Antriebselemente dienenden Verbindungsgestänges 16,17,18 können auch einzelne Antriebselemente vorgesehen sein, die miteinander synchronisiert sind, etwa über eine elektronische Ablaufsteuerung, insbesondere bei automatisiertem Betätigen des Verdecks.

Um das Verdeck 5 in seiner in den Verdeckkasten 2 abgelegten Position festzulegen, sind zusätzlich seitliche Verriegelungselemente 25,26 vorgesehen, die als Klappen ausgebildet und unterseitig mit hervorstehenden Andruckteilen 27 versehen sind. Bei Abwärtsschwenken der Klappen 25,26 um deren Schwenkachsen 28,29 gelangen die Andruckteile 27 zur Anlage an das eingelegte Verdeck 5, wodurch dieses abwärts gepreßt und an einer Klapperbewegung oder dergleichen gehindert wird.

## Patentansprüche

1. Cabriolet-Fahrzeug (1) mit einem Verdeckkasten (2) und einem darin ablegbaren beweglichen Verdeck (5), wobei der Verdeckkasten (2) zumindest bereichsweise durch einen aufschwenkbaren Verdeckkastendeckel (3) abdeckbar ist, der während seiner Öffnung mit der Fahrtrichtung (F) einen stumpfen Winkel einschließt, **dadurch gekennzeichnet, daß** der Verdeckkastendeckel (3) aus einer im wesentlichen horizontalen, den Verdeckkasten (2) abdeckenden Schließstellung in eine aufrechte, in das Cabriolet-Fahrzeug (1) abgesenkte Öffnungsstellung verlagerbar ist.

2. Cabriolet-Fahrzeug nach Anspruch 1, **dadurch gekennzeichnet, daß** in Öffnungsstellung der Verdeckkastendeckel (3) hinter den Lehnen (8) einer Sitzreihe (4) des Innenraums angeordnet ist, wobei der in Schließstellung vordere Endbereich (6) des Verdeckkastendeckels (3) in Öffnungsstellung einen unteren Endbereich des Verdeckkastendeckels (3) bildet.

3. Cabriolet-Fahrzeug nach einem der Ansprüche 1 oder 2, **dadurch gekennzeichnet, daß** dem in Fahrtrichtung vorderen Ende (6) des Verdeckkastendeckels (3) eine in einer Kulisse (31) auf und ab bewegliche Schwenkachse (14) zugeordnet ist.

4. Cabriolet-Fahrzeug nach einen der Ansprüche 1 bis 3, **dadurch gekennzeichnet, daß** der Verdeckkastendeckel (3) zumindest zwei seitliche, gegenüber einem mittleren Hauptteil (9) schwenkbare Seitenteile (10;11) umfaßt.

5. Cabriolet-Fahrzeug nach Anspruch 4, **dadurch gekennzeichnet, daß** die Seitenteile (10;11) in Schließstellung des Verdeckkastendeckels (3) im wesentlichen fluchtend zum Hauptteil (9) und in Öffnungsstellung gegenüber diesem nach vorne abgewinkelt stehen.

6. Cabriolet-Fahrzeug nach einem der Ansprüche 4 oder 5, **dadurch gekennzeichnet, daß** die Aufschwenkbewegung des Verdeckkastendeckels (3) und die Abwinklungsbewegung der Seitenteile (10;11) gegenüber dem Hauptteil (9) miteinander synchronisiert sind.

7. Cabriolet-Fahrzeug nach Anspruch 6, **dadurch gekennzeichnet, daß** zur Synchronisation ein mechanisches Verbindungsgestänge (16;17;18) zwischen der Schwenkachse (14) und den Seitenteilen (10;11) vorgesehen ist.

## Claims

1. Convertible vehicle (1) having a folding-top compartment (2) and a movable folding top (5) able to be stowed therein, the folding-top compartment (2) being able to be covered, at least in part, by a folding-top compartment cover (3) which is able to be pivoted open, which folding-top compartment cover (3) makes an obtuse angle with the direction of travel (F) while it is opening, **characterised in that** the folding-top compartment cover (3) can be displaced from a substantially horizontal closed position in which the folding-top compartment (2) is covered to an upright opened position in which it is lowered into the convertible vehicle (1).

2. Convertible vehicle according to claim 1, **characterised in that,** in the open position, the folding-top compartment cover (3) is arranged behind the backrests (8) of a row of seats (4) in the passenger compartment, the end-region (6) of the folding-top compartment cover (3) which is at the front in the closed position forming a bottom end-region of the folding-top compartment cover (3) in the open position.

3. Convertible vehicle according to either of claims 1 and 2, **characterised in that** the end (6) of the folding-top compartment cover (3) which is at the front in the direction of travel has associated with it a pivot shaft (14) which is movable up and down in a slideway (31).

4. Convertible vehicle according to one of claims 1 to 3, **characterised in that** the folding-top compartment cover (3) comprises at least two lateral side portions (10; 11) which are pivotable relative to a central main portion (9).

5. Convertible vehicle according to claim 4, **characterised in that,** when the folding-top compartment cover (3) is in the closed position, the side portions (10; 11) are substantially flush with the main portion (9), and when it is in the open position they are angled forward relative to the latter.

6. Convertible vehicle according to either of claims 4 and 5, **characterised in that** the pivoting-open movement of the folding-top compartment cover (3) and the angling movement of the side portions (10; 11) relative to the main portion (9) are synchronised with one another.

7. Convertible vehicle according to claim 6, **characterised in that** a mechanical connecting linkage (16; 17; 18) is provided between the pivot shaft (14) and the side portions (10; 11) for synchronisation purposes.

## Revendications

1. Véhicule convertible (1) comprenant un coffre de capote (2) et une capote mobile (5) pouvant être rangée dans celui-ci, le coffre de capote (2) pouvant être recouvert, du moins par zones, par un couvercle de coffre de capote (3) pivotant, qui pendant son ouverture forme un angle obtus avec le sens de la marche (F),
**caractérisé en ce que**
le couvercle de coffre de capote (3) peut être déplacé d'une position de fermeture pour l'essentiel horizontale recouvrant le coffre de capote (2) dans une position d'ouverture verticale descendue dans le véhicule convertible (1).

2. Véhicule convertible selon la revendication 1,
**caractérisé en ce qu'**
en position d'ouverture le couvercle de coffre de capote (3) est disposé derrière les dossiers (8) d'une rangée de sièges (4) de l'habitable, la zone d'extrémité avant (6) du couvercle de coffre de capote (3) en position de fermeture formant une zone d'extrémité du couvercle de coffre de capote (3) inférieure en positon d'ouverture.

3. Véhicule convertible selon l'une quelconque des revendications 1 ou 2,
**caractérisé en ce qu'**
à l'extrémité avant (6) du couvercle de coffre de capote (3) dans le sens de la marche est associé un axe de pivotement (14) mobile vers le haut et vers le bas dans une coulisse (31).

4. Véhicule convertible selon l'une quelconque des revendications 1 à 3,
**caractérisé en ce que**
le couvercle de coffre de capote (3) comprend au moins deux éléments latéraux (10; 11) longitudinaux pivotant par rapport à un élément principal central (9).

5. Véhicule convertible selon la revendication 4,
**caractérisé en ce qu'**
en position de fermeture du couvercle de coffre de capote (3) les éléments latéraux (10 ; 11) sont pour l'essentiel alignés sur l'élément principal (9), et en position d'ouverture pliés vers l'avant par rapport à celui-ci.

6. Véhicule convertible selon l'une quelconque des revendications 4 ou 5,
**caractérisé en ce que**
le mouvement de pivotement d'ouverture du couvercle de coffre de capote (3) et le mouvement de pliage des éléments latéraux (10, 11) par rapport à l'élément principal (9) sont synchronisés l'un avec l'autre.

7. Véhicule convertible selon la revendication 6,
**caractérisé en ce que**
pour la synchronisation une tringlerie de liaison mécanique (16 ; 17 ; 18) est prévue entre l'axe de pivotement (14) et les éléments latéraux (10 ; 11).
